# EUROPEAN PATENT APPLICATION

(11) **EP 1 126 710 A1**
(43) Date of publication of application: **22.08.2001**
(21) Application number: 00850028.2
(22) Date of filing: 15.02.2000
(51) Int. Cl.: H04N 7/15

(54) **A method and an apparatus for video mixing of bit streams**

(71) Applicant: Telefonaktiebolaget L M Ericsson (Publ), 126 25 Stockholm (SE)
(72) Inventor: Einarsson,Torbjörn, 112 40 Stockholm (SE); Sjöberg, Rickard, 147 30 Tumba (SE); Christopoulos, Charilaos, 192 57 Sollentuna (SE); Björk, Niklas, 136 61 Haninge (SE); Adam, Joseph, 113 41 Stockholm (SE)
(74) Representative: Sandström, Staffan Sven

(57) **Abstract**

In a method and an apparatus for mixing video streams, the video mixing takes place in the compressed domain. The computational load is thereby reduced, which in turn saves costs. A Possible application is a multi-point control unit (MCU) provided as a centralized unit in a video conference.

## Description

### TECHNICAL FIELD

The present invention relates to a method and a device for mixing bitstreams of video.

### BACKGROUND OF THE INVENTION AND PRIOR ART

In the rapid development of new multimedia services, the multi-user video conference is one application. In a multi-user video conference a number of users are connected to each other so that each of the users can see and communicate with any of the other participants in the conference.

When holding a multi-user video conference, it has been found that it is user-friendly to display more than one of the other participants on the screen. The reason for this is that even though a participant is not speaking at the moment, it can still be of interest to watch him or her. Also, in some cases, people tend to speak at the same time.

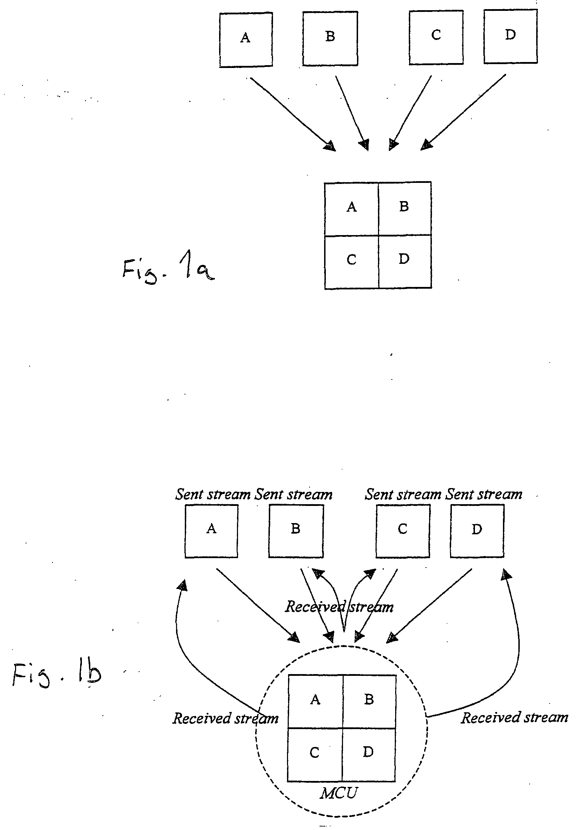

In the case when a centralized mode of the conference is used, such as by means of using a multi-point control unit (MCU), the different video streams from the different participants have to be mixed, for example by converting four QCIF video streams into one CIF video stream, as is illustrated in Figs. 1a and 1b.

When the different video streams have been mixed together into one single video stream the composed video stream is transmitted to the different parties of the video conference, where each transmitted video stream preferably follows a set scheme indicating who will receive what video stream. In general, the different users prefer to receive different video streams. This results in that the multi point control unit needs to perform a large amount of video mixing, which in turn results in a large demand for processing power.

In order to form such a composed video stream, the conventional solution is to decode the separate incoming video streams from the respective parties, mix the video streams in accordance with the set schemes for the different users and then encode the composite images and transmit it to the respective users from the MCU.

As stated above this straightforward solution requires lots of processing power in the MCU, due to the fact that a complete decoding and a complete encoding of the received video streams are necessary. Also, the image quality will degrade due to the tandem coding.

Furthermore, in the US patent No. 5,675,393, an image processing apparatus for composing a plurality of coded images into one image without decoding the plurality of coded images when the images are transmitted using the H.261 standard is disclosed. This apparatus uses the fact that in H.261, both QCIF and CIF images are encoded as a set of independent GOBs (Group of Blocks) of the same width and height. The mixing can therefore be done by interleaving coded GOBs from four QCIF images into one bitstream corresponding to a CIF image.

However, for more modern and flexible video standards, such as

ITU-T H.263 and MPEG-4, this method does not work, while there is still a need for mixing a number of incoming video streams at a low computational cost.

### SUMMARY

It is an object of the present invention to provide a method and an apparatus for composing compressed video streams.

This object is obtained by means of the method and apparatus as set out in the appended claims.

### BRIEF DESCRIPTION OF THE DRAWINGS

The present invention will now be described in more detail by way of non-limiting examples and with reference to the accompanying drawings, in which:
- Figs. 1a and 1b show the combination of four QCIF images into one CIF image.
- Fig. 2 illustrates four end users connected to a common multi-point control unit (MCU).
- Figs. 3 - 5 illustrate different cross-sections between different images in a composed image.
- Figs. 6 - 7, illustrate a stepwise change of a quantizer value in a composed image, and
- Fig. 8 is a flow chart illustrating different procedural steps carried out in an MCU when forming a composed image in the compressed domain.

### DESCRIPTION OF PREFERRED EMBODIMENTS

In Figs. 1a and 1b, the general construction of a coded image in CIF format using information from four coded QCIF images for H.263 is shown. In order to form the composed CIF image only the Macro block layer and Block layer information from the coded QCIF images are reused, whereas the other layers have to be recreated in order to correspond to the new format.

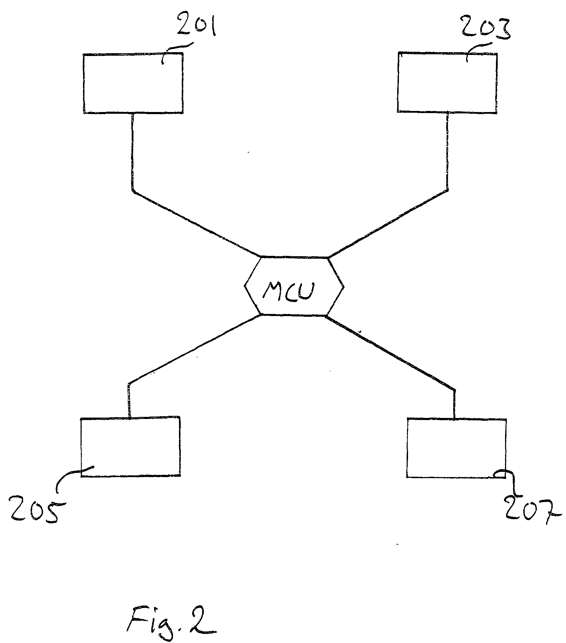

Further, in Fig. 2, four end users 201, 203, 205 and 207 connected to a common multi-point control unit (MCU) 209 is shown.

However, two problems arise when mixing video streams in the compressed domain if the H. 263 standard is used in the video conference set up between the end users 201, 203, 205 and 207.

Thus, first the motion vectors will be incorrect at the cross section of the QCIF interface. Second, the value of the quantization poses a problem. Thus, the four macro blocks of the four QCIF images may be, and usually are, coded using different quantization values. The quantizer must therefore be adjusted in the mixed image comprising the four images from the different participants.

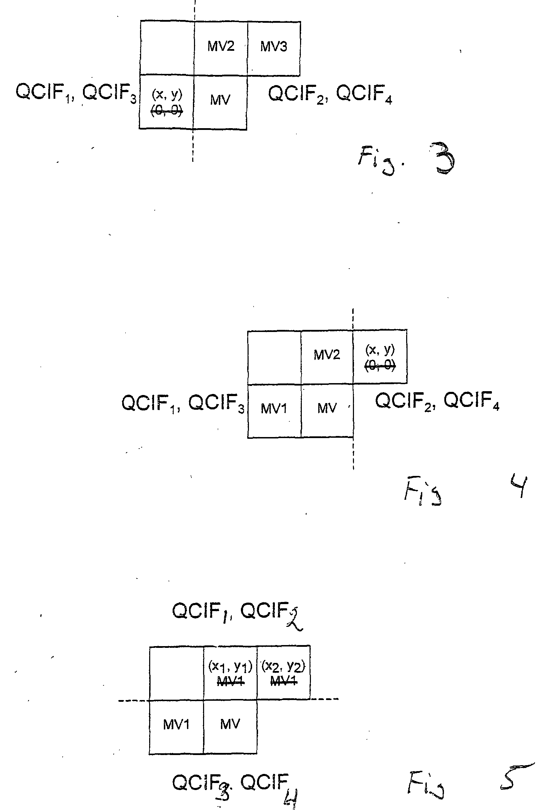

Thus, the motion vectors in H.263 are coded differentially using a spatial neighbourhood of three motion vectors, which have already been transmitted. There will hence be a problem at the cross sections in the mixed CIF image formed by the four QCIF images, due to the fact that the predictor motion vectors that previously were outside the QCIF images now are inside the CIF image. This is illustrated in Figs. 3 - 5.

In Fig. 3, the cross section between the QCIF images to the left in the composed CIF image and the QCIF images to the right in the composed CIF image is shown. In this case the motion vector prediction candidate MV1, which had the value (0,0) for the QCIF image now has a value (x,y) for the QCIF images to the right in the composed CIF image.

In order to overcome this problem the motion vector difference is recalculated using MV1 set to (x,y) instead of (0,0). Then new motion vector differences are calculated for MV using MV1 equal to (x,y).

In Fig. 4, the same cross section as in Fig. 3 is shown. In this case the problem is how to correctly calculate the motion vector MV to the right in the left QCIF images in the composed CIF image. As is seen in Fig. 4, a problem will occur with the motion vector predictor candidate MV3, which in the original QCIF image was outside the image but now is inside the composed CIF image.

In order to overcome this problem the motion vector difference is recalculated using MV3 set to (x,y) instead of (0,0). Then new motion vector differences are calculated for MV using MV3 equal to (x,y).

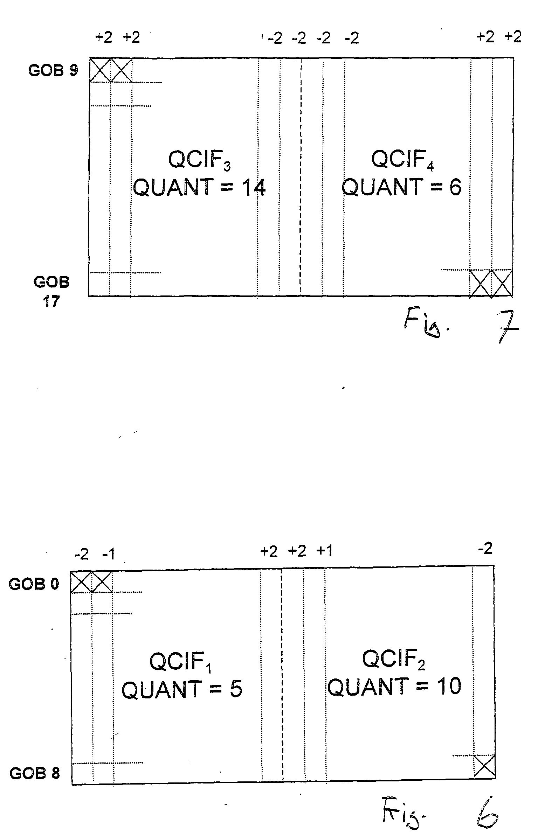

Finally, there will be a problem at the boundary between the upper QCIF images and the lower QCIF images in the composed CIF image as is seen in Fig. 5. Thus, the motion vector predictor candidates MV2 and MV3, which in the original QCIF images was set to MV1 because they were outside the QCIF image are now set to (x1, y1) and (x2, y2).

One way to overcome this problem is to use a similar scheme as for horizontal prediction and recalculate the motion vector difference. Another way is to insert a GOB (Group of Block) header at GOB number 9. The introduction of this GOB header makes it unnecessary to recalculate the motion vector differences, since prediction is not made across GOB boundaries. Therefore, there is no difference between an image border and a GOB border in this particular situation.

Analogously, if more flexible types of independent segments are available as the slices in Annex K of ITU-T H.263 (1998) or video packets in MPEG-4, the horizontal dependence can be broken by introducing segments corresponding to half rows. If such segments are used in the whole picture, no recalculation of motion vector differences needs to be done.

The second major problem that arises is that the macro blocks from the four QCIF images which are used to form the composed CIF image usually are coded using different quantization coefficients, i.e. different values for the quantizer. Thus, the resulting CIF image must either have different quantizer values for different macroblocks and follow the values used for the QCIF images, or recalculate the quantized transform coefficients of the macro blocks so that they correspond to the quantizer value of the CIF image.

In order to reduce this problem a GOB header may be introduced at GOB number 9. The introduction of the GOB header will result in that a new quantizer value is set and which will be used from Macro block 198 and onwards. Thus, the introduction of the GOB header reduces the problem to two subproblems, i.e. how to handle the boundary between QCIF image number 1 and number 2 and between QCIF image number 3 and number 4 in the composed CIF image.

In Fig. 6, the border or cross section between the upper two QCIF images, i.e. QCIF image number 1 and number 2 in the composed CIF image is shown. In the example given in conjunction with Fig. 6, QCIF image number 1 is quantized using a quantizer having a value of 5 and the QCIF image number 2 has a quantizer having a value of 10. In order to shift the quantizer from 5 in QCIF image number 1 to 10 in QCIF image number 2, the possibility to change the quantizer in the image is utilized.

Thus, since H.263 allows for a quantizer value change with an integer step in the range [-2, 2] between two adjacent macro blocks the quantizer can be changed stepwise at the cross section. It is of course desirable to change the quantizer as quickly as possible, since the stepwise change of the quantizer will require a recalculation of the transform coefficients in the macro blocks involved.

As is seen in Fig. 6, Macro block 0 and Macro block 1 are not involved in the quantizer adjustment. This is due to the fact that PQUANT is set to 5 in the picture layer and there is therefore no need to change the quantizer. The last macro block is neither involved in any quantizer adjustment.

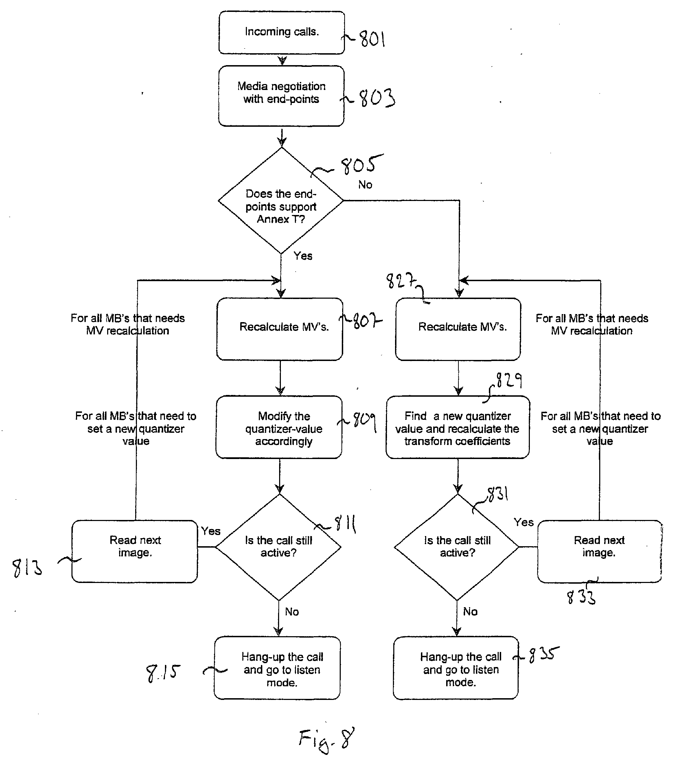

In Fig. 7, the border or cross section between the lower two QCIF images, i.e. QCIF image number 3 and number 4 in the composed CIF image is shown. In the example given in conjunction with Fig. 7, QCIF image number 3 is quantized using a quantizer having a value of 14 and the QCIF image number 4 has a quantizer having a value of 6. In order to shift the quantizer from 14 in QCIF image number 3 to 6 in QCIF image number 4, the possibility to change the quantizer in the image is utilized again.

It should be noted the Macro block 198 and 199 are not involved in the quantizer adjustment. The reason for this is that GQUANT is set to 6 in the GOB header that is introduced in GOB number 9 as described above, and that there is therefore no need to change the quantizer.

Because the stepwise change of the quantizer, the procedure will require a recalculation of the transform coefficients in the macro blocks involved as described above in conjunction with Fig. 6. All but the last Macro block involved in the stepwise change of the quantizer needs to undergo a transform coefficient recalculation in order to correspond to the new quantizer value.

Further reduction of the quantization problem can be done by introducing GOB headers at the beginning of every line of the CIF image. This will allow the possibility of starting with a new quantizer at the left edge of each row, and thereby remove the need for changing the quantizer in steps at the beginning and the end of line.

Finally, the last quantization mismatch problem at the vertical border between subpictures can be removed in two ways. If flexible segment structures are available as in H.263 (1998) or

MPEG-4, segments corresponding to half-rows can be used to decouple the pictures as was discussed for motion vectors. This will also reduce the need for recalculation of motion vectors differences in an analogous way.

An alternative way is available if Annex T of H.263 (1998) is supported. This annex provides the possibility of changing the quantizer to any possible value at any macroblock. However, such a method requires that the participating parties all support the Annex T of the H.263 standard.

In Fig. 8 a flowchart illustrating the basic procedural steps performed in an MCU when forming composed CIF image using four QCIF input images for the H.263 standard. In a preferred embodiment some or all of the steps shown in Fig 8 are performed using a suitable software executed by a computer.

Thus, first in a block 801, the incoming calls to the MCU are received. Next, in a block 803, the MCU performs conventional negotiations with the terminal equipments corresponding to the incoming calls. Thereupon, the MCU checks if the equipment in the end point terminals supports the Annex T of the H.263 standard in a block 805. If the answer in block 805 is yes, the MCU proceeds to a block 807.

In the block 807 the motion vectors are recalculated as described above. Next, in a block 809 the quantizer value is modified as described above. Thereupon, in a block 811, the MCU checks if the call is still active, if so the MCU proceeds to block 813. If the call is found to be inactive in the block 811 the MCU proceeds to a block 815, where the call is hang-up and the MCU returns to a listening mode.

In block 813 the MCU reads the next incoming image, recalculates the motion vectors for all macro blocks needing such a recalculation and sets a new quantizer value for all macro blocks needing a new quantizer before returning to block 807.

If, on the other hand, it is determined in block 805 that the end point equipment does not support Annex T of the H.263 standard, the MCU proceeds from block 805 to a block 827. In the block 827 the motion vectors are recalculated as described above. Next, in a block 829 the quantizer value is modified and the transform coefficients are recalculated as described above. Thereupon, in a block 831, the MCU checks if the call is still active, if so the MCU proceeds to block 833. If the call is found to be inactive in the block 811 the MCU proceeds to a block 835, where the call is hang-up and the MCU returns to a listening mode. In block 833 the MCU reads the next incoming image, recalculates the motion vectors for all macro blocks needing such a recalculation and sets a new quantizer value for all macro blocks needing a new quantizer before returning to block 807.

There may be other macroblock quantities that are predicted from previously coded macroblocks. One notable example is the coding of DCT coefficients in intra-coded Macro-blocks in MPEG-4 or in H.263 (1998) when using Annex I, the Advanced Intra mode. Mixing pictures will lead to new predictors at the boundaries, so that the DCT coefficient differences with respect to the predictor need to be recalculated and recoded. The two basic principles of either recalculating predictors and quantizers or inserting new segment boundaries can be used in such cases as well.

The method and apparatus for forming a composed video image as described herein thus make it possible to mix compressed video streams in the compressed domain, without a need for decompression, which will reduce the computational load and increase the image quality. Also, even though the present invention only has been described with reference to the H.263, it is understood that the same technique can be used in other video coding standards, such as MPEG 4.

## Claims

1. A method of, in the compressed domain, forming a composed video image having a first format comprising a number of different original video images having a second format, when the original images are coded using an algorithm forming a video stream comprising a number of independent segments, **characterized by** the steps of:
- composing the original video images having a second format into one image having the first format, and
- inserting a segment header at the intersection between a first row of original images in the composed image and a second row of original images in the composed image.

2. A method according to claim 1, **characterized by** the additional step of:
- performing a stepwise change of quantizer value at the cross-section between adjacent original images in the composed image.

3. A method according to any of claims 1 or 2, **characterized by** the additional step of:
- introducing a new segment header at the beginning of every line of the image.

4. A method according to any of claims 1 - 3, **characterized by** the additional step of:
- recalculating any motion vectors being different between the first and second format.

5. A method according to any of claims 1 - 4, **characterized in** that the transmission standard used is H.263 or MPEG-4.

6. A method according to any of claims 1 - 5, **characterized in** that the independent segments are group of blocks (GOB).

7. A method according to claim 1, when the coding method used is H.263 and supporting Annex T, **characterized by** the additional step of:
- setting a new value in the macroblock at the cross-section between adjacent original images in the composed image.

8. A method according to any of claims 1 - 7, when flexible type segments are available, **characterized in** that segments corresponding to rows in the sub images are used.

9. A computer program, which when run on a computer, performs the method according to any of claims 1 - 4.

10. An apparatus comprising means for, in the compressed domain, forming a composed video image having a first format comprising a number of different original video images having a second format, when the original images are coded using an algorithm forming a video stream comprising a number of independent segments, **characterized by:**
- means for composing the original video images having a second format into one image having the first format, and
- means for inserting a segment header at the intersection between a first row of original images in the composed image and a second row of original images in the composed image.

11. An apparatus according to claim 10, **characterized by:**
- means for performing a stepwise change of quantizer value at the cross-section between adjacent original images in the composed image.

12. An apparatus according to any of claims 10 - 11,
**characterized by:**
- means for introducing a new segment header at the beginning of every line of the image.

13. An apparatus according to any of claims 10 - 12,
**characterized by:**
- means for recalculating any motion vectors being different between the first and second format.
